# EUROPÄISCHE PATENTSCHRIFT

(11) **EP 1 807 674 B1**
(45) Veröffentlichungstag und Bekanntmachung des Hinweises auf die Patenterteilung: **06.08.2008**
(21) Anmeldenummer: 05787211.1
(22) Anmeldetag: 07.09.2005
(51) Int. Cl.: G01B 7/06, F01D 5/18

(54) **VERFAHREN ZUM ERMITTELN DER WANDDICKE EINES HOHLEN BAUTEILS**
METHOD FOR DETERMINING THE WALL THICKNESS OF A HOLLOW COMPONENT
PROCEDE POUR DETERMINER L'EPAISSEUR DE PAROI D'UN ELEMENT CREUX

(30) Priorität: 03.11.2004 EP 04026104
(43) Veröffentlichungstag der Anmeldung: 18.07.2007
(60) Teilanmeldung: 08000414.6
(73) Patentinhaber: SIEMENS AKTIENGESELLSCHAFT, 80333 München (DE)
(72) Erfinder: BAST, Ulrich, 81667 München (DE); JABADO, Rene, 14199 Berlin (DE); KRÜGER, Ursus, 14089 Berlin (DE); RINDLER, Michael, 15566 Schöneiche (DE); WILKENHÖNER, Rolf, 14532 Kleinmachnow (DE); REICHE, Ralph, 13465 Berlin (DE); KÖRTVELYESSY, Daniel, 13469 Berlin (DE)
(86) Internationale Anmeldenummer: PCT/EP2005/054421
(87) Internationale Veröffentlichungsnummer: WO 2006/048347

(56) Entgegenhaltungen:
- EP-A- 1 394 360
- US-A- 5 373 235
- US-A- 5 416 411
- HOHMANN R ET AL: "Aircraft wheel testing with machine-cooled HTS SQUID gradiometer system" IEEE TRANSACTIONS ON APPLIED SUPERCONDUCTIVITY IEEE USA, Bd. 9, Nr. 2, Juni 1999 (1999-06), Seiten 3801-3804, XP002321890 ISSN: 1051-8223

## Beschreibung

Die vorliegende Erfindung betrifft ein Verfahren zum Ermitteln der Wanddicke eines hohlen Bauteils, insbesondere eines hohlen Turbinenbauteils wie zum Beispiel einer hohlen Turbinenschaufel.

Zum Ermitteln der Wanddicke eines hohlen Bauteils kommen heute zumeist Ultraschallmessverfahren oder Wirbelstrommessverfahren zur Anwendung.

Bei Ultraschallmessverfahren wird eine Ultraschallwelle an der Oberfläche der Wand, deren Dicke zu ermitteln ist, erzeugt und die Laufzeit der Ultraschallwelle vom Erzeugungspunkt zur Rückseite der Wand, an welcher ein Teil der Welle reflektiert wird, und zurück zur Ursprungsstelle gemessen. Bei bekannter Schallgeschwindigkeit im Material der Wand kann aus der Laufzeit der Ultraschallwelle die Wanddicke bestimmt werden. Bei sehr dünnen Wänden stößt diese Methode jedoch an ihre Grenzen, da der Zeitpunkt der Ankunft der reflektierten Ultraschallwelle nicht eindeutig bestimmt werden kann. Für hohle Bauteile, die aus einer auf Nickel oder Kobalt basierenden Legierung hergestellt sind, beträgt die minimale Wanddicke, die mittels des Ultraschallverfahrens ermittelt werden kann, etwa 0,5 mm. Dies ist insbesondere für Turbinenbauteile wie etwa Turbinenschaufeln von Bedeutung, da diese häufig aus Basislegierungen hergestellt sind, die auf Nickel oder Kobalt basieren. Ultraschallmessverfahren sind bspw. in der DE 191 09 568 A1 beschrieben.

Die US 5,373,235 offenbart ein Verfahren zur Bestimmung der Wanddicke eines Rohres mittels eines Wirbelstromsensors. Dabei wird vor dem Erfassen der Messgröße das Rohr mit einer Trägerflüssigkeit gefüllt, in der ferromagnetische Partikel suspendiert sind.

In einem Wirbelstrommessverfahren wird ein zeitlich veränderliches Magnetfeld, das bspw. von einer wechselstromdurchflossenen Erregerspule erzeugt wird, dazu benutzt, Wirbelströme, in der Wand des Bauteils zu induzieren, die wiederum ein Magnetfeld, ein sog. Sekundär-Magnetfeld, in der Wand induzieren. Anhand des Sekundär-Magnetfeldes kann die Impedanz (also der Realteil und den Imaginärteil des komplexen Widerstandes) der Wand gemessen werden. Aus der Impedanzmessung kann anhand des Vergleiches mit einer Referenzmessung an einem Referenzkörper die Wanddicke ermittelt werden.

Ein alternatives Wirbelstrommessverfahren induziert in der Wand, deren Dicke zu ermitteln ist, Wirbelströme mittels Magnetfeldern, deren Frequenz bspw. zwischen 500 kHz und 20 mHz variiert wird. Anhand einer Messung der Impedanz als Funktion der Frequenz des erregenden Magnetfeldes kann die Dicke der Wand ermittelt werden. Mit abnehmender Frequenz des erregenden Feldes vergrößert sich nämlich die Eindringtiefe der Wirbelströme in das Material. Bei genügend niedriger Frequenz erreicht das induzierte Sekundär-Magnetfeld daher den Hohlraum der Schaufel, was mit einer charakteristischen Zunahme der Impedanz einhergeht. Die Wandstärke kann dann aus der Frequenz ermittelt werden, bei der die Zunahme der Impedanz auftritt. Wirbelstrommessverfahren sind bspw. in der WO 99/26062 A1 beschrieben.

Gegenüber dem vorliegenden Stand der Technik ist es Aufgabe der Erfindung, ein vorteilhaftes Verfahren zum Ermitteln der Wanddicke eines hohlen Bauteils zur Verfügung zu stellen.

Diese Aufgabe wird durch ein Verfahren zum Ermitteln der Wanddicke eines hohlen Bauteils nach Anspruch 1 gelöst. Die abhängigen Ansprüche enthalten vorteilhafte Ausgestaltungen des erfindungsgemäßen Verfahrens.

Im erfindungsgemäßen Verfahren zum Ermitteln der Wanddicke eines hohlen Bauteils wird ein zeitlich veränderliches Magnetfeld dazu genutzt, ein Sekundär-Magnetfeld in einer einen Hohlraum des Bauteils umgebenden Bauteilwand zu induzieren. Das Magnetfeld kann dabei bspw. mittels einer wechselstromdurchflossenen Erregerspule erzeugt werden. Das Ermitteln der Dicke der Bauteilwand erfolgt durch Erfassen mindestens einer das Sekundär-Magnetfeld beeinflussenden Größe der Wand, die bspw. die Impedanz oder insbesondere die Permeabilität der Wand sein kann. Im erfindungsgemäßen Verfahren wird vor dem Erfassen der mindestens einen Größe ein ferromagnetisches Material auf die dem Hohlraum zugewandte Seite der Bauteilwand aufgebracht oder in den Hohlraum eingebracht. Als ferromagnetisches Material kann dabei insbesondere ein ferromagnetisches Metall, eine ferromagnetische Legierung oder ein ferromagnetischer keramischer Werkstoff mit hoher magnetischer Permeabilität Verwendung finden. Bspw. im Vergleich zu für das Herstellen von Turbinenschaufeln verwendeten Werkstoffen, weist das ferromagnetische Material eine um Zehnerpotenzen (10⁷ bis 10¹⁰) höhere Permeabilitätszahl µᵣ auf. Dieser Unterschied lässt sich mittels Wirbelstromtechnik gut nachweisen. Das ferromagnetische Material kann in alle nach außen zugänglichen Hohlräume eingebracht werden. Dies lässt eine universelle Wanddickenbestimmung an hohlen Bauteilen, insbesondere an hohlen Gasturbinenschaufeln, zu.

Falls die Wanddicke von Gasturbinenschaufeln, welche häufig aus Basislegierungen hergestellt sind, die auf Nickel oder Kobalt basieren, ermittelt werden soll, eignet sich als ferromagnetisches Metall insbesondere Nickel oder Kobalt oder als ferromagnetische Legierung eine Legierung mit hohem Nickel- oder Kobaltanteil, da diese ferromagnetischen Materialien die auf Nickel- oder Kobalt basierende Basislegierung der Turbinenschaufel, wenn überhaupt, nur wenig kontaminieren. Selbstverständlich sind die genannten Metalle oder Legierungen auch für das Ermitteln der Wanddicke von anderen aus Nickel- oder Kobalt enthaltenden Basislegierungen hergestellten hohlen Bauteilen besonders geeignet.

Vorteilhafter Weise kann das ferromagnetische Material als ferromagnetisches Pulver vorliegen, was das Einbringen in die Hohlräume vereinfacht.

In einer ersten Variante zum Einbringen des ferromagnetischen Pulvers auf die Innenseite der Bauteilwand, d.h. auf die dem Hohlraum zugewandte Seite der Wand, wird das Pulver in Form eine Suspension mit einem Binder und einem flüchtigen Trägermittel aufgebracht. Nach dem Verdunsten des flüchtigen Trägermittels, das bspw. Wasser oder Alkohol sein kann, bildet das zurückbleibende Pulver-Binder-Gemisch eine ferromagnetische Innenbeschichtung in den Hohlräumen aus. Das Erfassen der mindestens einen Größe erfolgt, nachdem das Trägermittel verdunstet ist. Nachdem das Erfassen aller für die Ermittlung der Wanddicke nötigen Größen abgeschlossen ist, wird das ferromagnetische Pulver wieder ausgewaschen. Ein rückstandsfreies Auswaschen ist bspw. möglich, wenn zum Auswaschen die gleiche Trägerflüssigkeit verwendet wird, die auch in der Suspension Verwendung fand.

Eine weitere Möglichkeit, das ferromagnetische Material auf die Innenseite der Bauteilwand aufzubringen, besteht darin, das ferromagnetische Material in Form von in einem Lösungsmittel, bspw. einer Salzlösung, gelösten Ionen aufzubringen. Nach dem Verdunsten des Lösungsmittels bilden die Ionen eine Innenbeschichtung der Bauteilwand. Das Erfassen der mindestens einen Größe erfolgt, nachdem das Lösungsmittel verdunstet ist. Nach dem Erfassen aller für das Ermitteln der Wanddicke nötigen Größen, wird das ferromagnetische Material wieder aufgelöst und ausgewaschen.

Zum Auflösen und Auswaschen der Innenbeschichtung kann insbesondere das gleiche Lösungsmittel Verwendung finden, in dem die Ionen beim Aufbringen auf die Bauteilwand gelöst waren..

In einer Ausgestaltung des erfindungsgemäßen Verfahrens erfolgt das Ermitteln der Dicke der Bauteilwand, indem die mindestens eine Größe sowohl mit an die zu messende Bauteilwand, angehaltener Messsonde erfasst wird, als auch für verschiedene Abstände der Messsonde über einem Referenzkörper aus einem ferromagnetischen Material, das dem auf die Innenseite der Bauteilwand aufgebrachten ferromagnetischen Material zumindest ähnelt. Die mindestens eine mit an die Bauteilwand angehaltener Messsonde erfasste Größe wird dann mit den für die verschiedenen Abstände der Messsonde über dem Referenzkörper erfassten Größen verglichen. Derjenige Abstand zwischen der Messsonde und dem Referenzkörper, welcher die Größe liefert, die der für die Wand gemessenen Größe am ähnlichsten ist, entspricht im Wesentlichen der Dicke der Wand. Mit dem beschriebenen Verfahren kann die gesamte Wand einer hohlen Turbinenschaufel vermessen werden. Als Obergrenze für diese Vorgehensweise sind Wandstärken von ca. 5 bis 6 mm anzunehmen.

In einer alternativen Ausgestaltung des erfindungsgemäßen Verfahrens erfolgt das Ermitteln der Dicke der Bauteilwand, indem die Frequenz des erregenden zeitlich veränderlichen Magnetfeldes variiert wird. Als die mindestens eine Größe wird die Permeabilität der Wand als Funktion der Frequenz des zeitlich veränderlichen Magnetfeldes erfasst. Aus dem Verlauf der Permeabilität als Funktion der Frequenz kann dann die Wanddicke ermittelt werden. Das auf die Innenseite der Bauteilwand aufgebrachte ferromagnetische Material führt nämlich zu einem charakteristischen Steilanstieg der Permeabilität, wenn die Wirbelströme die Innenfläche der Wand erreichen. Das ferromagnetische Material verstärkt dabei aufgrund seiner Magnetisierbarkeit das Sekundär-Magnetfeld, welches durch die Wirbelströme induziert wird, wesentlich. Das Sekundär-Magnetfeld wird von der Wirbelstromsonde gemessen. Es ist somit das eigentliche Messsignal. Im Vergleich zu Messungen der elektrischen Leitfähigkeit als Funktion der Frequenz, wie dies im Stand der Technik erfolgt, wird die Messgenauigkeit erhöht und die Nachweisgrenze im Hinblick auf größere Wanddicken verbessert.

Mit dem erfindungsgemäßen Verfahren können im Vergleich zu Ultraschallmessungen, wie sie im Stand der Technik durchgeführt werden, Wandstärken von weniger als 0,5 mm gut vermessen werden.

Weiter Merkmale, Eigenschaften und Vorteile der vorliegenden Erfindung ergeben sich aus der nachfolgenden Beschreibung von Ausführungsbespielen unter Bezugnahme auf die beiliegenden Figuren.
Figur 1 zeigt ein erstes Verfahren zum Aufbringen von ferromagnetischem Material auf die Innenseite einer Wand eines hohlen Bauteils.
Figur 2 zeigt das Bauteil aus Figur 1 während des Ermittelns der Wanddicke.
Figur 3 zeigt in einer vereinfachten Darstellung die Abhängigkeit der für eine Bauteilwand gemessenen Permeabilität von der Frequenz eines erregenden Magnetfeldes.
Figur 4 zeigt in einer stark schematisierten Darstellung einen Verfahrensschritt einer ersten Variante des Verfahrens zum Ermitteln der Wanddicke eines hohlen Bauteils.
Figur 5 zeigt beispielhaft eine Gasturbine in einem Längsteilschnitt.
Figur 6 zeigt in perspektivischer Ansicht eine Laufschaufel oder Leitschaufel einer Strömungsmaschine.
Figur 7 zeigt eine Brennkammer einer Gasturbine

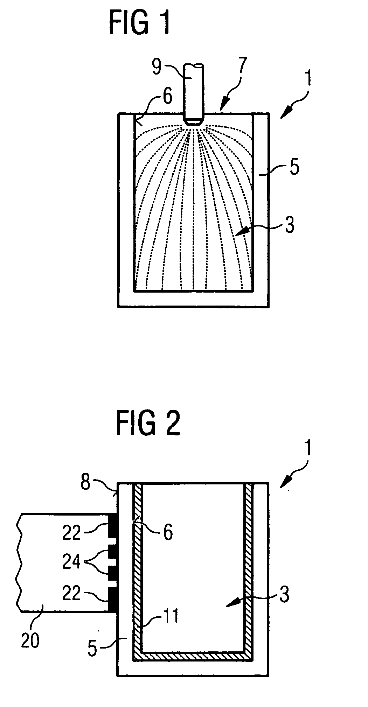

In Figur 1 ist das Aufbringen einer ferromagnetischen Beschichtung auf die Innenseite der Wand eines hohlen Bauteils dargestellt.

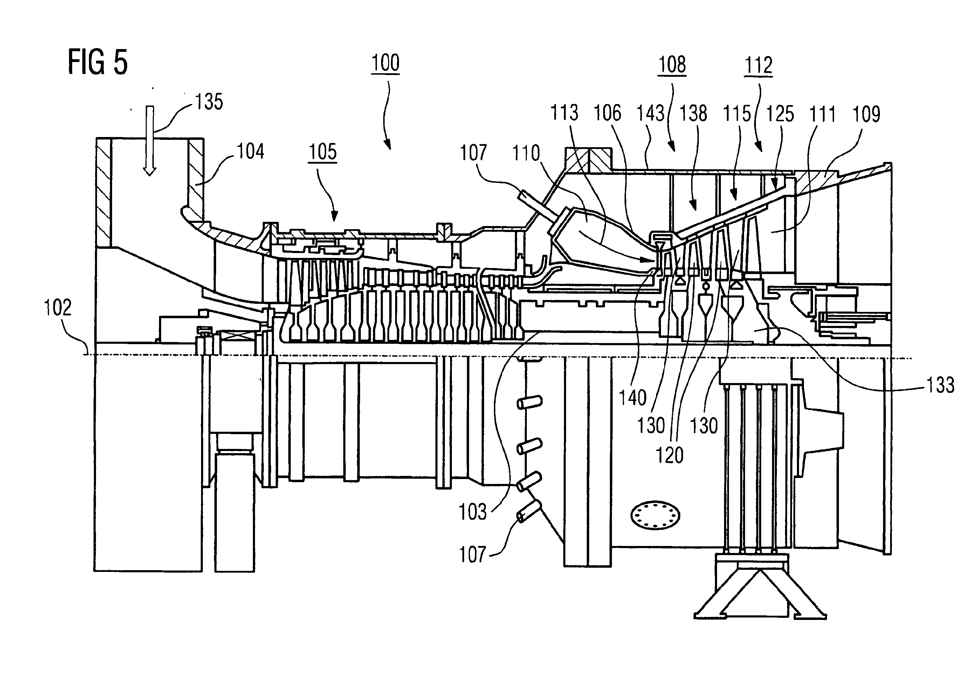

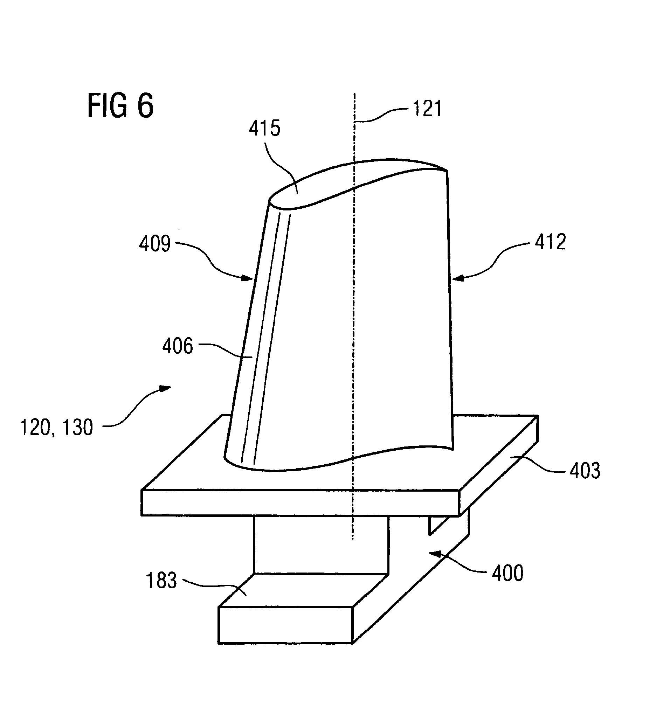

Das Bauteil 1, das insbesondere eine hohle Gasturbinenschaufel 120, 130 (Fig. 5, 6) sein kann, ist in Figur 1 in einer stark schematisierten Darstellung im Schnitt gezeigt. Es weist einen Hohlraum 3 auf, der von einer Bauteilwand 5 begrenzt wird. Über eine Öffnung 7 ist der Hohlraum 3 vom Äußeren des Bauteils 1 her zugänglich.

Durch die Öffnung 7 wird eine Spritzdüse 9 in den Hohlraum 3 des Bauteils 1 eingeführt. Die Spritzdüse 9 wird dazu verwendet, eine Suspension eines ferromagnetischen Pulvers, eines Binders und eines flüchtigen Trägermittels auf die Innenseite 6 der Bauteilwand 5 aufzuspritzen. Dabei kann die Spritzdüse 9 gegebenenfalls auch relativ zur Bauteilwand 5 innerhalb des Hohlraumes bewegt werden.

Nachdem die Suspension auf die Innenseite 6 der Bauteilwand 5 aufgespritzt worden ist, verdunstet das flüchtige Trägermittel, und es bleibt eine ferromagnetische Beschichtung 11 auf der Innenseite 6 der Bauteilwand 5 zurück, die das ferromagnetische Pulver und den Binder umfasst (Fig. 2).

Zum Ermitteln der Wanddicke des Bauteils 1 wird eine Messsonde 20 mit der Außenseite 8 der Bauteilwand 5 in Kontakt gebracht. Die Messsonde 20, die in der Figur 2 im Schnitt dargestellt ist, umfasst eine Erregerspule 22 und eine Messeinheit 24, die ebenfalls als Spule ausgebildet sein kann.

Mittels eines durch die Erregerspule 22 fließenden Wechselstroms wird ein zeitlich veränderliches Magnetfeld erzeugt, welches in die Bauteilwand 5 eindringt. In der Bauteilwand 5 verursacht es Wirbelströme, die ihrerseits zu einem zeitlich veränderlichen Magnetfeld, dem so genannten Sekundär-Magnetfeld führen. Die Eigenschaften des Sekundär-Magnetfeldes werden durch die physikalischen Größen des Materials der Bauteilwand beeinflusst. Insbesondere übt die Permeabilität µᵣ einen starken Einfluss auf das Sekundär-Magnetfeld aus.

Da die ferromagnetische Beschichtung 11 eine deutlich höhere Permeabilität µᵣ als das Material der Bauteilwand 5 aufweist, übt es einen im Vergleich zum Einfluss der Bauteilwand 5 dominierenden Einfluss auf das Sekundär-Magnetfeld aus.

Mittels der Empfängerspule (24) kann durch Messen des Sekundär-Magnetfeldes die Permeabilität erfasst werden.

Das Ermitteln der Wanddicke des Bauteils 1 aus dem Signal der Empfängerspule 24 kann auf verschiedene Weisen erfolgen.

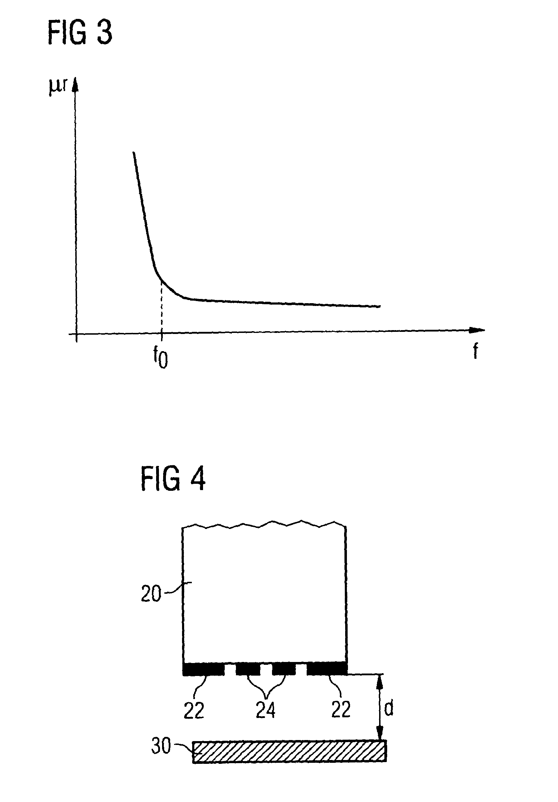

Eine Möglichkeit, die Wanddicke zu ermitteln, ist in Figur 3 dargestellt. Diese beruht darauf, die Frequenz des durch die Erregerspule 22 fließenden Wechselstroms zu variieren, bspw. zwischen 500 kHz und 20 MHz. Je höher die Frequenz des durch die Erregerspule 22 fließenden Wechselstromes ist, desto weniger tief dringt das zeitlich veränderliche Magnetfeld in die Bauteilwand 5 ein. Die Wanddicke kann daher bestimmt werden, indem bspw. die Frequenz des durch die Erregerspule 22 fließenden Wechselstroms ausgehend von einer hohen Frequenz verringert wird. Mit zunehmender Frequenzverringerung dringt das zeitlich veränderliche Magnetfeld immer tiefer in die Bauteilwand ein und erreicht bei einer bestimmten Frequenz f₀ die ferromagnetische Beschichtung 11. Bei dieser Frequenz f₀ steigt die von der Empfängerspule 24 erfasste Permeabilität steil an. Aus der Frequenz f₀, bei der dieser steile Anstieg auftritt, kann die Wanddicke der Behälterwand 5 ermittelt werden.

Eine alternative Vorgehensweise zum Ermitteln der Dicke der Bauteilwand 5 ist in Figur 4 schematisch dargestellt. In dieser Vorgehensweise findet keine Variation der Frequenz des durch die Erregerspule 22 fließenden Wechselstromes statt, d.h. die Messung wird bei einer festen Frequenz des zeitlich veränderlichen Magnetfeldes durchgeführt. Zum Ermitteln der Wanddicke wird zum einen das in der Empfängerspule 24 verursachte Signal bei an der Außenseite 8 der Behälterwand 5 anliegender Messsonde 20 (Fig. 2) erfasst.

In weiteren Schritten wird die Messsonde 20 in verschiedene definierte Abstände zu einem Referenzkörper 30 gebracht, der aus demselben oder einem sehr ähnlichen Material wie die Ferromagnetische Beschichtung aufgebaut ist (Fig.4). Für die verschiedenen Abstände d wird das Signal in der Messspule 24 erfasst, das ein von der Erregerspule 22 ausgehendes zeitlich veränderliches Magnetfeld verursacht, das dieselben Parameter aufweist, wie das Magnetfeld, das bei an die Außenseite 8 der Behälterwand 5 angelegter Messsonde 20 Verwendung fand. Die für die verschiedenen Abstände d erfassten Signale werden mit demjenigen Signal verglichen, das die Messspule 24 bei an die Behälterwand 5 angelegter Messsonde erfasst hat. Derjenige Abstand, bei dem das Signal dem Signal der an die Behälterwand 5 angelegten Messsonde 20 am meisten ähnelt, entspricht der Wanddicke der Behälterwand 5.

Nachdem die für das Ermitteln der Wanddicke erforderlichen Größen erfasst worden sind, wird die ferromagnetische Beschichtung wieder aus dem Hohlraum 3 entfernt. Dazu wird der Hohlraum 3 mit der Trägerflüssigkeit solange gespült, bis die ferromagnetische Schicht rückstandsfrei ausgewaschen ist.

Im vorangegangenen Ausführungsbeispiel wurde die ferromagnetische Schicht auf die Innenseite 6 der Behälterwand 5 aufgebracht, indem eine Suspension auf die Innenseite der Behälterwand aufgesprüht worden ist. Alternativ kann auch eine Lösung aufgesprüht werden, die Ionen des ferromagnetischen Materials enthält. Nach dem Verdunsten des Lösungsmittels bleibt das ferromagnetische Material als Beschichtung auf der Innenseite 6 der Behälterwand zurück. Die Messung der Wanddicke erfolgt dann wie im ersten Ausführungsbeispiel. Das Entfernen der ferromagnetischen Beschichtung auf der Innenseite der Behälterwand 5 erfolgt nach dem Erfassen der für das Ermitteln der Wanddicke notwendigen Größen dadurch, dass die ferromagnetische Beschichtung mit dem Lösungsmittel wieder aufgelöst und komplette ausgewaschen wird.

Das ferromagnetische Pulver bzw. die ferromagnetische Ionen, die in den beschriebenen Ausführungsbeispielen Verwendung fanden, können bspw. ferromagnetische Metalle, insbesondere Eisen (Fe), Kobalt (Co) oder Nickel (Ni) sein. Alternativ können auch ferromagnetische Legierungen aus weichmagnetischen Werkstoffen wie Fe-Si-, Fe-Al, oder Fe-Ni-Legierungen, aus hartmagnetischen Werkstoffen wie Fe-Al-Ni-Co- oder Sm-Co-Fe-Legierungen sowie Heuslersche Legierungen Verwendung finden. Heuslersche Legierungen sind bspw. in A.F. Hollemann, E. Wiberg "Lehrbuch der anorganischen Chemie "91.-100. Auflage, Walter de Gruyter, Berlin, New York, 1985 beschrieben.

Neben ferromagnetischen Metallen und ferromagnetischen Legierungen kommen auch ferromagnetische keramische Werkstoffe zur Verwendung als ferromagnetisches Material in den Ausführungsbeispielen in Betracht.

Als Messsonde können herkömmliche Wirbelstrommesssonden Verwendung finden. Ein möglicher Aufbau der Messsonde kann der WO 99/26062 A1 sowie den darin genannten Druckschriften entnommen werden. Auf die Offenbarung der WO 99/26062 A1 und der darin genannten Druckschriften wird daher bezüglich eines möglichen Aufbaus der Messsonde (20) verwiesen.

Als Messsonden können auch die so genannten Squid (Superconducting-quantum-interference-device) zur Bestimmung der Wandstärke benutzt werden. Aufgrund der ernormen Empfindlichkeit der Squid im Vergleich zu konventionellen Magnetfeldsensoren kann die Wanddicke in hinreichender Genauigkeit bestimmt werden. Hier wird eine Messgenauigkeit von ca. 0,1mm und besser angestrebt. Am besten werden Squids aus Hochtemperatursupraleitern verwendet, die mit flüssigem Stickstoff gekühlt werden können und daher leichter handhabbar sind. Somit können kleine Abstände zu der vermessenen Bauteiloberfläche realisiert und eine hinreichende laterale Auflösung bei dem Messverfahren erzielt werden.

Oft werden in die Turbinenschaufeln noch Bohrungen für Kühlluftkanäle eingebracht, wobei es auch hier wichtig ist, dass gewisse Wanddicken eingehalten werden.

Das erfindungsgemäße Verfahren kann daher auch zur Bestimmung der Wanddicke bzw. des Abstandes der hergestellten Kühlluftbohrung im Inneren benutzt werden. Der Hohlraum 3 gemäß Figur 1 oder 2 entspricht dabei einem Kühlluftkanal im Inneren einer Turbinenschaufel 120, 130.

Die Figur 5 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

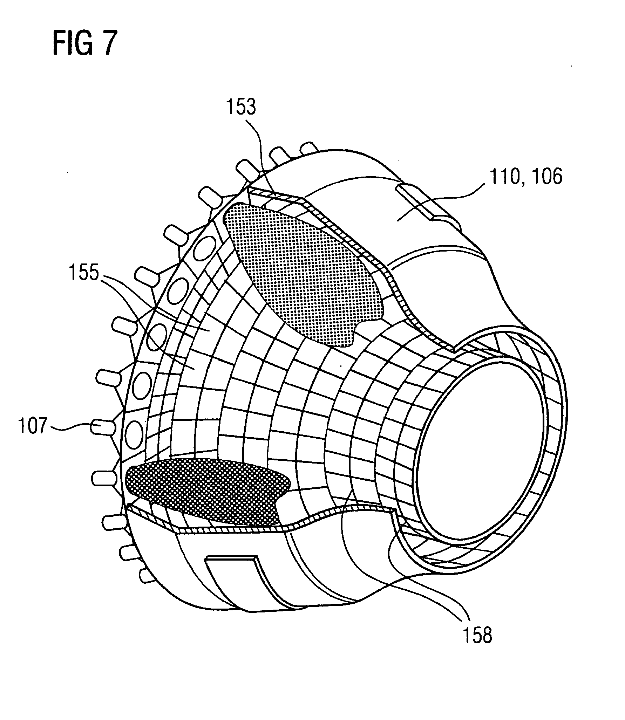

Die Figur 7 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Ermitteln der Wanddicke eines hohlen Bauteils (1), in welchem ein zeitlich veränderliches Magnetfeld dazu genutzt wird, ein Sekundär-Magnetfeld in einer einen Hohlraum (3)des Bauteils (1) umgebenden Bauteilwand (5) zu induzieren und in welchem das Ermitteln der Dicke der Bauteilwand (5) durch Erfassen mindestens einer das Sekundär-Magnetfeld beeinflussenden Größe der Bauteilwand (5) erfolgt,
wobei vor dem Erfassen der mindestens einen Größe ein ferromagnetisches Material (11, 40) auf die dem Hohlraum (3) zugewandte Seite (6) der Bauteilwand (5) aufgebracht oder in den Hohlraum (3) eingebracht wird, **dadurch gekennzeichnet, dass** das ferromagnetische Material in Form von in einem flüchtigen Lösungsmittel gelösten Ionen oder durch eine Suspension eines ferromagnetischen Pulvers, eines Binders und eines flüchtigen Lösungsmittels auf die Bauteilwand aufgebracht wird und
das Lösungsmittel verdunstet wird,
bevor das Erfassen der mindestens einen Größe erfolgt.

2. Verfahren nach Anspruch 1,
**dadurch gekennzeichnet, dass**
als ferromagnetisches Material (11, 40)
ein ferromagnetisches Metall,
eine ferromagnetische Legierung oder
ein ferromagnetischer keramischer Werkstoff mit hoher magnetischer Permeabilität Verwendung findet.

3. Verfahren nach Anspruch 2,
**dadurch gekennzeichnet, dass**
als ferromagnetisches Metall Nickel oder Kobalt oder als ferromagnetische Legierung eine Legierung mit hohem Nickel- oder Kobaltanteil Verwendung findet.

4. Verfahren nach Anspruch 1,
**dadurch gekennzeichnet, dass**
das ferromagnetische Pulver und der Binder nach dem Abschluss des Erfassens aller für die Ermittlung der Wanddicke nötigen Größen ausgewaschen wird.

5. Verfahren nach Anspruch 4,
**dadurch gekennzeichnet, dass**
zum Auswaschen das gleiche Lösungsmittel wie dasjenige, das in der Suspension Verwendung fand, zur Anwendung kommt.

6. Verfahren nach Anspruch 1,
**dadurch gekennzeichnet, dass**
das ferromagnetische Material nach dem Abschluss des Erfassens aller für das Ermitteln der Wanddicke nötigen Größen wieder aufgelöst und ausgewaschen wird.

7. Verfahren nach Anspruch 6,
**dadurch gekennzeichnet, dass**
zum Auswaschen das gleiche Lösungsmittel Verwendung findet, wie das, in dem die Ionen beim Aufbringen auf die Bauteilwand (5) gelöst waren.

8. Verfahren nach einem der Ansprüche 1 bis 7,
**dadurch gekennzeichnet, dass**
das Ermitteln der Dicke der Bauteilwand (5) erfolgt, indem die mindestens eine Größe sowohl mit an die Bauteilwand (5), deren Wanddicke zu bestimmen ist, angehaltener Messsonde (20) erfasst wird, als auch für verschiedene Abstände der Messsonde (20) über einem Referenzkörper (30) aus einem ferromagnetischen Material, das dem auf die Bauteilwand (5) aufgebrachten ferromagnetischen Material (11, 40) zumindest ähnelt, und
die mit an die Bauteilwand (5) angehaltener Messsonde erfasste mindestens eine Größe mit den für die verschiedenen Abstände der Messsonde über dem Referenzkörper (30) erfassten Größen verglichen wird.

9. Verfahren nach einem der Ansprüche 1 bis 10,
**dadurch gekennzeichnet, dass**
das Ermitteln der Dicke der Bauteilwand (5) erfolgt, indem die Frequenz des zeitlich veränderlichen Magnetfeldes variiert wird,
als die mindestens eine Größe die Permeabilität der Wand als Funktion der Frequenz des zeitlich veränderlichen Magnetfeldes erfasst wird und
die Wanddicke aus dem Verlauf der Permeabilität als Funktion der Frequenz ermittelt wird.

10. Verfahren nach einem der vorherigen Ansprüche,
**dadurch gekennzeichnet, dass**
ein SQUID als Messsonde (20) verwendet wird.

## Claims

1. Method for determining the wall thickness of a hollow component (1), in which a time-variant magnetic field is used to induce a secondary magnetic field in a component wall (5) enclosing a cavity (3) of the component (1), and in which the thickness of the component wall (5) is determined by recording at least one quantity of the component wall (5), which influences the magnetic field,
wherein before the at least one quantity is recorded, a ferromagnetic material (11, 40) is applied onto that side (6) of the component wall (5) which faces the cavity (3) or is introduced into the cavity (3), **characterized in that**
the ferromagnetic material is applied onto the component wall in the form of ions dissolved in a liquid solvent or by a suspension comprising a ferromagnetic powder, a binder and a volatile solvent, and
the solvent is evaporated before the at least one quantity is recorded.

2. Method according to Claim 1,
**characterized in that**
a ferromagnetic metal,
a ferromagnetic alloy or
a ferromagnetic ceramic material with a high magnetic permeability
is employed as the ferromagnetic material (11, 40).

3. Method according to Claim 2,
**characterized in that**
nickel or cobalt is employed as a ferromagnetic metal or
an alloy with a high nickel or cobalt content is used as a ferromagnetic alloy.

4. Method according to Claim 1,
**characterized in that**
the ferromagnetic powder and the binder are washed away after having concluded the recording of all quantities necessary for determining the wall thickness.

5. Method according to Claim 4,
**characterized in that**
the same solvent as was used in the suspension is employed for the washing.

6. Method according to Claim 1,
**characterized in that**
the ferromagnetic material is redissolved and washed away after having concluded the recording of all quantities necessary for determining the wall thickness.

7. Method according to Claim 6,
**characterized in that**
the same solvent as that which was used for applying the ions onto the component wall (5) is employed for the washing.

8. Method according to one of Claims 1 to 7,
**characterized in that**
the thickness of the component wall (5) is determined by measuring the at least one quantity both with a measurement probe (20) held against the component wall (5) whose wall thickness is to be found, and for different distances of the measurement probe (20) above a reference body (30) made of a ferromagnetic material, which is at least similar to the ferromagnetic material (11, 40) applied onto the component wall (5), and
the at least one quantity recorded with the measurement probe held against the component wall (5) is compared with the quantities recorded for the different distances of the measurement probe above the reference body (30).

9. Method according to one of Claims 1 to 10,
**characterized in that**
the thickness of the component wall (5) is determined by varying the frequency of the time-variant magnetic field, measuring the permeability of the wall as the at least one quantity, as a function of the frequency of the time-variant magnetic field, and
determining the wall thickness from the profile of the permeability as a function of the frequency.

10. Method according to one of the preceding claims,
**characterized in that**
a SQUID is used as the measurement probe (20).

## Revendications

1. Procédé de détermination de l'épaisseur de paroi d'un élément ( 1 ) creux, dans lequel on utilise un champ magnétique variable dans le temps pour induire un champ magnétique secondaire dans une paroi ( 5 ) de l'élément entourant une cavité ( 3 ) de l'élément ( 1 ) et
dans lequel la détermination de l'épaisseur de la paroi ( 5 ) de l'élément s'effectue en relevant au moins l'une des grandeurs de la paroi ( 5 ) de l'élément influençant le champ magnétique secondaire,
dans lequel, avant de relever la au moins une grandeur, on dépose une matière ( 11, 40 ) ferromagnétique du côté ( 6 ) de la paroi ( 5 ) de l'élément, tourné vers la cavité ( 3 ), ou on l'introduit dans la cavité ( 3 ),
**caractérisé en ce que**
l'on dépose la matière ferromagnétique sur la paroi de l'élément sous la forme d'ions dissous dans un solvant volatil ou par une suspension d'une poudre ferromagnétique d'un liant et d'un solvant volatil et
on évapore le solvant,
avant d'effectuer le relevé de la au moins une grandeur.

2. Procédé suivant la revendication 1,
**caractérisé en ce que**
l'on utilise comme matière ( 11, 40 ) ferromagnétique
un métal ferromagnétique
un alliage ferromagnétique ou
un matériau céramique ferromagnétique ayant une grande perméabilité magnétique.

3. Procédé suivant la revendication 2,
**caractérisé en ce que**
l'on utilise comme métal ferromagnétique du nickel ou du cobalt ou comme alliage ferromagnétique un alliage ayant une grande proportion de nickel ou de cobalt.

4. Procédé suivant la revendication 1,
**caractérisé en ce que**
on enlève par lavage la poudre ferromagnétique et
le liant après la fin du relevé du toutes les grandeurs nécessaires à la détermination le l'épaisseur de la paroi.

5. Procédé suivant la revendication 4,
**caractérisé en ce que**
pour le lavage on utilise le même solvant que celui que l'on a utilisé dans la suspension.

6. Procédé suivant la revendication 1,
**caractérisé en ce que**
l'on redissous et enlève par lavage la matière ferromagnétique après la fin du relevé de toutes les grandeurs nécessaires à la détermination de l'épaisseur de la paroi.

7. Procédé suivant la revendication 6,
**caractérisé en ce que**
pour le lavage on utilise le même solvant que celui dans lequel les ions ont été dissous lors du dépôt sur la paroi ( 5 ) de l'élément.

8. Procédé suivant l'une des revendications 1 à 7,
**caractérisé en ce que**
l'on effectue la détermination de l'épaisseur de la paroi ( 5 ) de l'élément en relevant la au moins une grandeur tant par une sonde ( 20 ) de mesure maintenue sur la paroi ( 5 ) de l'élément dont on doit déterminer l'épaisseur qu'également, pour des distances différentes de la sonde ( 20 ) de mesure, par l'intermédiaire d'une pièce ( 30 ) de référence en un matériau ferromagnétique qui ressemble au moins à la matière ( 11, 40 ) ferromagnétique déposée sur la paroi ( 5 ) de l'élément et
on compare la au moins une grandeur relevée par une sonde de mesure maintenue sur la paroi ( 5 ) de l'élément aux grandeurs relevées en ayant les distances différentes de la sonde de mesure par l'intermédiaire de la pièce ( 30 ) de référence.

9. Procédé suivant l'une des revendications 1 à 10,
**caractérisé en ce que**
l'on effectue la détermination de l'épaisseur de la paroi ( 5 ) de l'élément en faisant varier la fréquence du champ magnétique variable dans le temps,
en relevant comme au moins une grandeur la perméabilité de la paroi en fonction de la fréquence du champ magnétique variable dans le temps et
en déterminant l'épaisseur de la paroi à partir de la courbe de la perméabilité en fonction de la fréquence.

10. Procédé suivant l'une des revendications précédentes,
**caractérisé en ce que**
on utilise un SQUID comme sonde ( 20 ) de mesure.
